# EUROPEAN PATENT APPLICATION

(11) **EP 4 486 047 A1**
(43) Date of publication of application: **01.01.2025**
(21) Application number: 22927787.6
(22) Date of filing: 25.02.2022
(51) Int. Cl.: H04W 74/08

(54) **RANDOM ACCESS METHOD, DEVICE, STORAGE MEDIUM, AND APPARATUS**

(71) Applicant: Beijing Xiaomi Mobile Software Co., Ltd., Beijing 100085 (CN)
(72) Inventor: ZHU, Yajun, Beijing 100085 (CN)
(74) Representative: Dehns Germany Partnerschaft mbB
(86) International application number: PCT/CN2022/078062
(87) International publication number: WO 2023/159504

(57) **Abstract**

The present application relates to the technical field of communications, and provides a random access method, a device, a storage medium, and an apparatus. Trigger information is acquired, wherein the trigger information is used for enabling a UE to trigger a random access process; uplink synchronization auxiliary information is determined; a current global navigation satellite system first position of the UE is determined; a random access channel preamble (RACH Preamble) signal is sent to a base station on the basis of the first position of the UE and the uplink synchronization auxiliary information. The present application provides a method for determining the first position and the uplink synchronization auxiliary information in the random access process of an NTN system, thereby ensuring that the UE can successfully access the base station in the NTN system.

## Description

### FIELD

The present invention relates to the field of communication technology, and more particularly, to a random access method and device, a storage medium, and an apparatus.

### BACKGROUND

In a communication system, when a user equipment (UE) is in an uplink out-of-synchronization state and/or an unconnected state, if the UE needs to send uplink data to a base station or the base station needs to send downlink data to the UE, the UE usually needs to send a random access channel preamble (RACH preamble) signal to the base station first to trigger a random access process to re-access the network. In a non-terrestrial network (NTN) system, the UE needs to determine a global navigation satellite system (GNSS) position and uplink synchronization assistance information before sending the RACH, so that the frequency offset pre-compensation and the propagation delay pre-compensation can be performed according to a first position and the uplink synchronization assistance information in the subsequent random access process.

In the related art, 3GPP currently only stipulates how to determine the first position and the uplink synchronization assistance information when the UE is in a connected state. However, when the UE is in the unconnected state, such as in the random access process before accessing the base station, how does the UE acquire the uplink synchronization assistance information and how does the UE acquire the first position are urgent problems to be solved.

### SUMMARY

The present invention provides a random access method and device, a storage medium, and an apparatus, which provide a method for determining a first position and uplink synchronization assistance information in a random access process of an NTN system.

In an aspect, embodiments of the present invention provide a random access method, which is performed by a user equipment (UE), and includes: acquiring trigger information, determining uplink synchronization assistance information; determining a first position of the UE; and sending a random access channel preamble (RACH preamble) signal to a base station according to the first position of the UE and the uplink synchronization assistance information. The trigger information indicates the UE to trigger a random access process.

In another aspect, embodiments of the present invention provide a random access method, which is performed by a base station, and includes: sending trigger information to a user equipment (UE); and receiving a random access channel preamble (RACH preamble) signal sent by the UE. The trigger information indicates the UE to trigger a random access process.

In an aspect, embodiments of the present invention provide a random access apparatus, which includes: an acquiring module, configured to acquire trigger information; a first determining module, configured to determine uplink synchronization assistance information; a second determining module, configured to determine a first position of the UE; and a sending module, configured to send a random access channel preamble (RACH preamble) signal to a base station according to the first position of the UE and the uplink synchronization assistance information. The trigger information indicates the UE to trigger a random access process.

In yet another aspect, embodiments of the present invention provide a random access apparatus, which includes: a sending module, configured to send trigger information to a user equipment (UE); and a receiving module, configured to receive an RACH preamble signal sent by the UE. The trigger information indicates the UE to trigger a random access process.

In yet another aspect, embodiments of the present invention provide a communication apparatus, which includes: a processor; and a memory having stored therein a computer program. The processor is configured to execute the computer program stored in the memory to cause the communication apparatus to perform the method as described in embodiments in an aspect above.

In yet another aspect, embodiments of the present invention provide a communication apparatus, which includes: a processor; and a memory having stored therein a computer program. The processor is configured to execute the computer program stored in the memory to cause the communication apparatus to perform the method as described in embodiments in another aspect above.

In yet another aspect, embodiments of the present invention provide a communication apparatus, which includes: a processor; and an interface circuit for receiving a code instruction and transmitting the code instruction to the processor. The processor is configured to run the code instruction to perform the method as described in embodiments in an aspect above.

In yet another aspect, embodiments of the present invention provide a communication apparatus, which includes: a processor; and an interface circuit for receiving a code instruction and transmitting the code instruction to the processor. The processor is configured to run the code instruction to perform the method as described in embodiments in another aspect above.

In yet another aspect, embodiments of the present invention provide a computer-readable storage medium having stored therein an instruction that, when executed, causes the method as described in embodiments in an aspect above to be performed.

In yet another aspect, embodiments of the present invention provide a computer-readable storage medium having stored therein an instruction that, when executed, causes the method as described in embodiments in another aspect above to be performed.

In summary, in the random access method and device/storage medium/apparatus provided by embodiments of the present invention, the UE may acquire the trigger information, and the trigger information indicates the UE to trigger the random access process; and the UE may determine the uplink synchronization assistance information and the first position of the UE; and the random access channel preamble (RACH preamble) signal is sent to the base station according to the first position of the UE and the uplink synchronization assistance information. Therefore, embodiments of the present invention propose a method for determining the first position and the uplink synchronization assistance information in the random access process of an NTN system, to ensure that the UE can successfully access the base station in the NTN system.

Additional aspects and advantages of embodiments of present invention will be given in part in the following descriptions, become apparent in part from the following descriptions, or be learned from the practice of the embodiments of the present invention.

### BRIEF DESCRIPTION OF THE DRAWINGS

These and other aspects and advantages of embodiments of the present invention will become apparent and more readily appreciated from the following descriptions made with reference to the drawings, in which:
FIG. 1a is a schematic flowchart of a random access method according to an embodiment of the present invention;
FIG. 1b is a schematic flowchart of a random access method according to another embodiment of the present invention;
FIG. 1c is a schematic flowchart of a random access method according to yet another embodiment of the present invention;
Fig. 1d is a schematic flowchart of a random access method according to yet another embodiment of the present invention;
FIG. 1e is a schematic flowchart of a random access method according to yet another embodiment of the present invention;
FIG. 2 is a schematic flowchart of a random access method according to yet another embodiment of the present invention;
FIG. 3 is a schematic flowchart of a random access method according to yet another embodiment of the present invention;
FIG. 4 is a schematic flowchart of a random access method according to yet another embodiment of the present invention;
FIG. 5 is a schematic flowchart of a random access method according to yet another embodiment of the present invention;
FIG. 6 is a schematic flowchart of a random access method according to yet another embodiment of the present invention;
FIG. 7 is a schematic flowchart of a random access method according to yet another embodiment of the present invention;
FIG. 8 is a schematic flowchart of a random access method according to yet another embodiment of the present invention;
FIG. 9 is a schematic flowchart of a random access method according to yet another embodiment of the present invention;
FIG. 10 is a schematic flowchart of a random access method according to yet another embodiment of the present invention;
FIG. 11 is a schematic block diagram of a random access apparatus according to an embodiment of the present invention;
FIG. 12 is a schematic block diagram of a random access apparatus according to another embodiment of the present invention;
FIG. 13 is a schematic block diagram of a user equipment according to an embodiment of the present invention; and
FIG. 14 is a schematic block diagram of a base station according to an embodiment of the present invention.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations described in the following illustrative embodiments do not represent all implementations consistent with embodiments of the present invention. Instead, they are merely examples of apparatuses and methods consistent with some aspects of embodiments of the present invention as recited in the appended claims.

Terms used in embodiments of the present invention are for the purpose of describing specific embodiments, but should not be construed to limit embodiments of the present invention. As used in embodiments of the present invention and the appended claims, "a/an", "said" and "the" in singular forms are intended to include plural forms, unless clearly indicated in the context otherwise. It should also be understood that, the term "and/or" used herein represents and contains any or all possible combinations of one or more associated items listed.

It should be understood that, although terms such as "first," "second" and "third" may be used in embodiments of the present invention for describing various information, these information should not be limited by these terms. These terms are used for distinguishing information of the same type from each other. For example, first information may also be referred to as second information, and similarly, the second information may also be referred to as the first information, without departing from the scope of embodiments of the present invention. As used herein, the term "if' may be construed to mean "when" or "upon" or "in response to determining" depending on the context.

Embodiments of the present invention are described in detail below, examples of which are illustrated in the accompanying drawings, in which the same or similar reference numerals refer to the same or similar elements throughout. Embodiments described below with reference to the accompanying drawings are illustrative and intended to explain the present invention, and should not be construed to limit the present invention.

The random access method and device, the storage medium, and the apparatus provided in the present invention will be described in detail below with reference to the accompanying drawings.

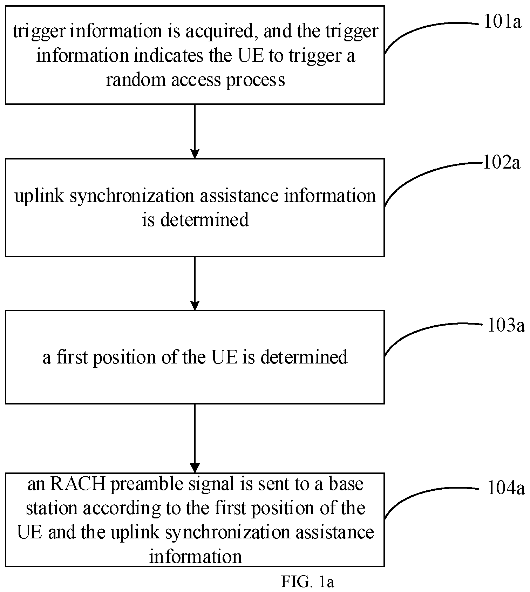

FIG. 1a is a schematic flowchart of a random access method according to an embodiment of the present invention, the method is performed by a UE, and as shown in FIG. 1a, the random access method may include the following steps.

In step 101a, trigger information is acquired, and the trigger information indicates the UE to trigger a random access process.

It should be noted that, in an embodiment of the present invention, the UE may refer to a device that provides voice and/or data connectivity to a user. The terminal device can communicate with one or more core networks via a radio access network (RAN). The UE may be an Internet of Things terminal, such as a sensor device, a mobile phone (or referred to as a "cellular" phone) and a computer with an Internet of Things terminal. For example, the UE may be a fixed, portable, pocket-sized, handheld, built-in computer or vehicle-mounted apparatus, such as a station (STA), a subscriber unit, a subscriber station, a mobile station, a mobile, a remote station, an access point, a remote terminal, an access terminal, a user terminal or a user agent. Alternatively, the UE may be a device of an unmanned aerial vehicle. Alternatively, the UE may be a vehicle-mounted device, for example, an electronic control unit with a wireless communication function, or a wireless terminal externally connected with an electronic control unit. Alternatively, the UE may be a roadside device, such as a street lamp, a signal lamp or other roadside devices with a wireless communication function.

In an embodiment of the present invention, the above trigger information may be sent by a base station to the UE, or may be sent by a high layer of the UE to a physical layer of the UE. Specifically, in an embodiment of the present invention, when the UE is in an uplink out-of-synchronization state and/or an unconnected state, if the base station needs to send downlink data to the UE, the base station will send the trigger information to the UE, and the trigger information may be, for example, paging information, or physical downlink control channel (PDCCH) order RACH information. In another embodiment of the present invention, when the UE is in an uplink out-of-synchronization state and/or an unconnected state, if the UE needs to send uplink data to the base station, the high layer of the UE will send the trigger information to the physical layer of the UE.

Further, in an embodiment of the present invention, after the UE acquires the trigger information, it may initiate the random access process.

In step 102a, uplink synchronization assistance information is determined.

In an embodiment of the present invention, the UE may start to determine the uplink synchronization assistance information after acquiring the trigger information. The uplink synchronization assistance information may at least include ephemeris information and/or common timing advance (common TA) related parameter information. When the sender of the trigger information is different, the method for determining the uplink synchronization assistance information is also different, and the related contents will be described in detail in the subsequent embodiments.

In step 103a, a first position of the UE is determined.

In an embodiment of the present invention, the first position includes, but not limited to: a global positioning system (GPS) position, or a GNSS position, etc., and the first position is a position of the UE at a current moment determined by the above two methods.

In an embodiment of the present invention, after acquiring the trigger information, the UE may start to determine the first position of the UE, and the above-mentioned method for determining the first position of the UE may include the following steps.

In step a, it is determined whether a requirement of a time error of a non-terrestrial network (Te_NTN) is met when a random access channel preamble (RACH preamble) is sent using a second position measured last time.

Specifically, in an embodiment of the present invention, the UE will periodically or aperiodically measure its position. The second position mentioned above includes but not limited to: a GPS position, or a GNSS position, etc., and the second position is a position of the UE determined by the above two methods before the current moment. The UE will predetermine the Te_NTN. On this basis, the UE will first determine whether the Te_NTN is met when the RACH preamble is sent using the second position measured last time, and determine the first position of the UE based on the determination result.

In step b, if the requirement of the Te_NTN is met when the RACH preamble is sent using the second position measured last time, the second position measured last time is determined as the first position of the UE.

In an embodiment of the present invention, when the RACH preamble is sent using the second position measured last time, if the requirement of the Te_NTN is met, it means that a difference between the second position measured last time and the current first position of the UE is small (that is, a movement range of the UE from a moment when the first position is measured last time to a current moment is relatively small). In this case, the second position measured last time may be directly determined as the first position of the UE.

In step c, if the requirement of the Te_NTN is not met when the RACH preamble is sent using the second position measured last time, the first position of the UE is re-measured, and the first position re-measured is determined as the first position of the UE.

In an embodiment of the present invention, when the RACH preamble is sent using the second position measured last time, if the requirement of the Te_NTN is not met, it means that a difference between the second position measured last time and the current first position of the UE is large (that is, a movement range of the UE from a moment when the first position is measured last time to a current moment is relatively large). In this case, if the second position measured last time is determined as the first position of the UE, it will cause a large error, so it is necessary to re-measure the first position of the UE, and the first position re-measured is determined as the first position of the UE.

In step 104a, an RACH preamble signal is sent to a base station according to the first position of the UE and the uplink synchronization assistance information.

In an embodiment of the present invention, the above-mentioned method for sending the RACH preamble signal to the base station according to the first position of the UE and the uplink synchronization assistance information may include the following steps.

In step 1, a position of a satellite is acquired according to the ephemeris information in the uplink synchronization assistance information.

In step 2, a frequency offset of a channel between the UE and the satellite is pre-compensated according to the first position of the UE and the position of the satellite to obtain a transmitting frequency.

In step 3, a propagation delay of the channel between the UE and the satellite and a propagation delay of a channel between the satellite and the base station are pre-compensated according to the first position of the UE, and related parameters of the position of the satellite and the common TA to obtain an uplink transmission timing position. This solution does not exclude embodiments in which the propagation delay of the channel between the UE and the satellite and the propagation delay of the channel between the satellite and the base station are pre-compensated according to other uplink synchronization information besides the related parameters of the ephemeris information and the common TA to obtain the uplink transmission timing position.

In step 4, the RACH preamble signal is sent to the base station according to the transmitting frequency and the uplink transmission timing position.

In an embodiment of the present invention, the UE may specifically send the RACH preamble signal to the base station through the physical layer.

In summary, in the random access method according to embodiments of the present invention, the UE may acquire the trigger information, and the trigger information indicates the UE to trigger the random access process; and the UE may determine the uplink synchronization assistance information and the first position of the UE; and the random access channel preamble (RACH preamble) signal is sent to the base station according to the first position of the UE and the uplink synchronization assistance information. Therefore, embodiments of the present invention propose a method for determining the first position and the uplink synchronization assistance information in the random access process of an NTN system, to ensure that the UE can successfully access the base station in the NTN system.

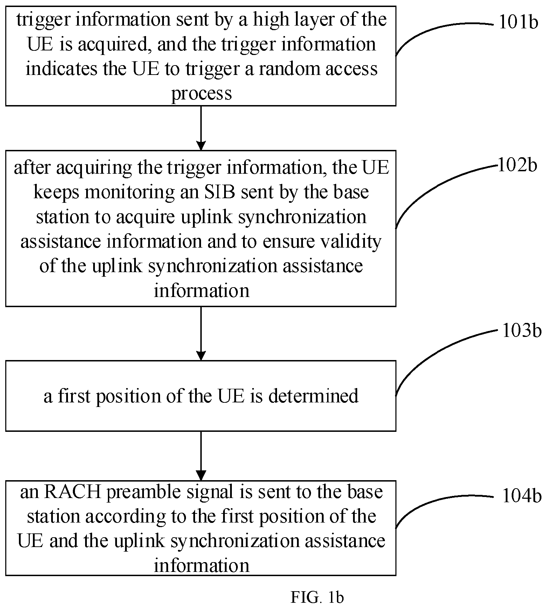

FIG. 1b is a schematic flowchart of a random access method according to an embodiment of the present invention. The method is performed by a UE. As shown in FIG. 1b, the random access method may include the following steps.

In step 101b, trigger information sent by a high layer of the UE is acquired. The trigger information indicates the UE to trigger a random access process.

For details on the step 101b, reference may be made to the embodiments described above, and they will not be elaborated in embodiments of the present invention here.

In step 102b, after acquiring the trigger information sent by the high layer of the UE, the UE keeps monitoring a system information block (SIB) x or an NTN-SIB sent by the base station to acquire uplink synchronization assistance information and to ensure validity of the uplink synchronization assistance information, where x is a positive integer, and the SIB x includes the uplink synchronization assistance information. Both the SIB x and the NTN-SIB may be system information blocks for carrying the uplink synchronization assistance information, which are not distinguished here, and are referred to as SIB-x in the following.

In an embodiment of the present invention, the uplink synchronization assistance information may include at least the ephemeris information and/or the common TA.

In an embodiment of the present invention, specifically, after the physical layer of the UE acquires the trigger information sent by the high layer of the UE, the UE starts to trigger the random access process. At this time, the UE is still in the unconnected state, and the UE starts to monitor the SIB x sent by the base station periodically to ensure the validity of the uplink synchronization assistance information. That is, in this embodiment, after the UE in the unconnected state receives the trigger information, the UE in the unconnected state will start to monitor the SIB x sent by the base station periodically to ensure the validity of the uplink synchronization assistance information. Specifically, the UE may monitor the SIB x according to configuration information of the SIB x previously configured by the base station, such as configuration information of the SIB x previously configured via radio resource control (RRC). Specifically, the configuration information of the SIB x previously configured by the base station may be those configured by the base station to the UE when the UE was in a connected state last time.

In addition, it should be noted that in an embodiment of the present invention, the above-mentioned SIB x may specifically include the following information:
1) Ephemeris (ephemeris information);
2) Common T A parameters;
3) Validity duration for UL sync information;
4) t-Service (the timing information on when the serving cell is going to stop serving the area);
5) Cell reference location;
6) Epoch time (effective time);
7) K_mac;
8) Cell-specific Koffset;
9) Indication for network enabled/disabled TA report.

It should be noted that based on the RAN2 protocol, the above "4) t-Service (the timing information on when the serving cell is going to stop serving the area)" can only be broadcast by quasi-earth fixed cells, not by earth mobile cells; and the above "5) Cell reference location" may be broadcast by quasi-earth fixed cells (FFS for earth mobile cells).

It should be noted that in an embodiment of the present invention, monitoring the SIB x sent by the base station to ensure the validity of the uplink synchronization assistance information specifically means that: when the monitored SIB x is valid (i.e., it is in the valid time), the SIB x will no longer be monitored, and when the monitored SIB x becomes invalid (i.e., the valid time expires), the SIB x will be monitored again.

For example, assuming that a period for the base station to send the SIB x is 3s, and the valid time of the SIB x is 10s, after the SIB x is monitored by the UE for the first time, the UE will monitor the SIB x for the second time after 10s.

In step 103b, a first position of the UE is determined.

In step 104b, an RACH preamble signal is sent to the base station according to the first position of the UE and the uplink synchronization assistance information.

In an embodiment of the present invention, specifically, the RACH preamble signal is sent to the base station by the physical layer of the UE.

It should be noted that, in an embodiment of the present invention, sending the RACH preamble signal specifically includes sending the RACH preamble signal to the base station according to the first position and the latest uplink synchronization assistance information acquired after the first position is determined.

Specifically, if the UE acquires the trigger information sent by the high layer at the 10th second in the above step 102b, and at this time, the UE starts to monitor the SIB x periodically sent by the base station, and if a sending period of the SIB x is 4s, and the time required by the UE to determine the first position is 10s, then the SIB x is monitored by the UE for the first time at the 14th second, the SIB x is monitored by the UE for the second time at the 18th second, and the first position of the UE is determined by the UE at the 20th second. For the time point (i.e., the 20th second) at which the first position is determined by the UE, the latest uplink synchronization assistance information currently acquired is uplink synchronization assistance information included in the SIB x that is monitored by the UE for the second time at the 18th second. Therefore, the UE may send the RACH preamble signal to the base station according to the first position and the uplink synchronization assistance information included in the SIB x that is monitored by the UE for the second time at the 18th second.

In addition, for the relevant descriptions on the steps 103b-103c, reference may be made to the embodiments described above, and they will not be elaborated in embodiments of the present invention here.

In summary, in the random access method according to embodiments of the present invention, the UE may acquire the trigger information, and the trigger information indicates the UE to trigger the random access process; and the UE may determine the uplink synchronization assistance information and the first position of the UE; and the random access channel preamble (RACH preamble) signal is sent to the base station according to the first position of the UE and the uplink synchronization assistance information. Therefore, embodiments of the present invention propose a method for determining the first position and the uplink synchronization assistance information in the random access process of an NTN system, to ensure that the UE can successfully access the base station in the NTN system.

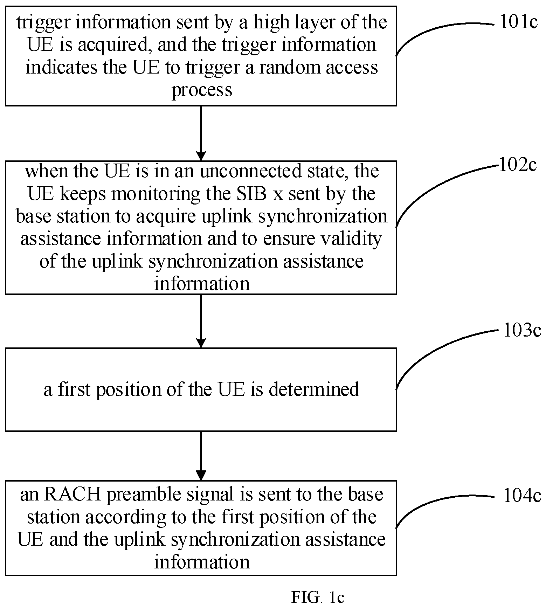

FIG. 1c is a schematic flowchart of a random access method according to an embodiment of the present invention. The method is performed by a UE. As shown in FIG. 1c, the random access method may include the following steps.

In step 101c, trigger information sent by a high layer of the UE is acquired. The trigger information indicates the UE to trigger a random access process.

In step 102c, when the UE is in an unconnected state, the UE keeps monitoring the SIB x sent by the base station to acquire uplink synchronization assistance information and to ensure validity of the uplink synchronization assistance information.

In an embodiment of the present invention, when the UE is in the unconnected state, the UE still keeps monitoring the SIB x sent by the base station to ensure the validity of the uplink synchronization assistance information. On this basis, after the UE acquires the trigger information sent by the high layer of the UE, it may use the uplink synchronization assistance information within the validity duration.

In an embodiment of the present invention, specifically, the UE may monitor the SIB x according to configuration information of the SIB x previously configured by the base station. Specifically, the configuration information of the SIB x previously configured by the base station may be those configured by the base station to the UE when the UE was in the connected state last time.

It should be noted that, in an embodiment of the present invention, a difference between the embodiment corresponding to FIG. 1c and the above embodiment corresponding to FIG. 1b is that the time when the UE monitors the SIB x periodically sent by the base station in the unconnected state is different. Specifically, in the embodiment corresponding to FIG. 1c, when the UE switches to the unconnected state, the UE will always monitor the SIB x periodically sent by the base station in the whole process of the UE being in the unconnected state to ensure the validity of uplink synchronization assistance information. In the above embodiment corresponding to FIG. 1b, when the UE switches to the unconnected state, the UE does not always monitor the SIB x periodically sent by the base station in the whole process of the UE being in the unconnected state to ensure the validity of the uplink synchronization assistance information. Instead, when the UE in the unconnected state receives the trigger information and triggers the random access process, it starts to monitor the SIB x periodically sent by the base station to ensure the validity of the uplink synchronization assistance information. That is, in the embodiment corresponding to FIG. 1b, in the whole process of the UE being in the unconnected state, the UE only monitors the SIB x periodically sent by the base station in a duration from the start of the random access process to the successful access to the base station to ensure the validity of the uplink synchronization assistance information.

Further, it should be noted that when the UE successfully accesses the base station and switches to the connected state, the UE will still monitor the SIB x periodically sent by the base station.

In step 103c, a first position of the UE is determined.

In step 104c, an RACH preamble signal is sent to the base station according to the first position of the UE and the uplink synchronization assistance information.

In addition, for the relevant descriptions on the steps 101c-104c, reference may be made to the embodiments described above, and they will not be elaborated in embodiments of the present invention here.

In summary, in the random access method according to embodiments of the present invention, the UE may acquire the trigger information, and the trigger information indicates the UE to trigger the random access process; and the UE may determine the uplink synchronization assistance information and the first position of the UE; and the random access channel preamble (RACH preamble) signal is sent to the base station according to the first position of the UE and the uplink synchronization assistance information. Therefore, embodiments of the present invention propose a method for determining the first position and the uplink synchronization assistance information in the random access process of an NTN system, to ensure that the UE can successfully access the base station in the NTN system.

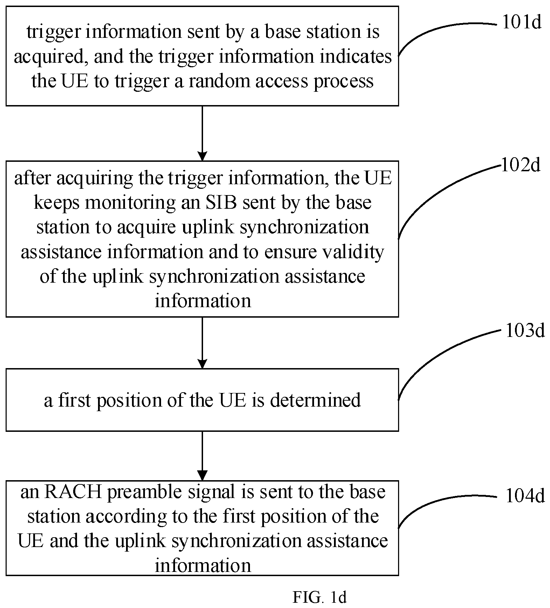

FIG. 1d is a schematic flowchart of a random access method according to an embodiment of the present invention. The method is performed by a UE. As shown in FIG. 1d, the random access method may include the following steps.

In step 101d, trigger information sent by a base station is acquired. The trigger information indicates the UE to trigger a random access process.

In step 102d, after acquiring the trigger information sent by the base station, the UE keeps monitoring the SIB x sent by the base station to acquire uplink synchronization assistance information and to ensure validity of the uplink synchronization assistance information.

In an embodiment of the present invention, the uplink synchronization assistance information may include at least ephemeris information and/or a common TA.

In an embodiment of the present invention, specifically, after the physical layer of the UE acquires the trigger information sent by the high layer of the UE, the UE starts to trigger the random access process. At this time, the UE is still in the unconnected state, and the UE starts to monitor the SIB x sent by the base station periodically to ensure the validity of the uplink synchronization assistance information. That is, in this embodiment, after the UE in the unconnected state receives the trigger information, the UE in the unconnected state will start to monitor the SIB x sent by the base station periodically to ensure the validity of the uplink synchronization assistance information. Specifically, the UE may monitor the SIB x according to configuration information of the SIB x previously configured by the base station. Specifically, the configuration information of the SIB x previously configured by the base station may be those configured by the base station to the UE when the UE was in a connected state last time.

In step 103d, a first position of the UE is determined.

In step 104d, an RACH preamble signal is sent to the base station according to the first position of the UE and the uplink synchronization assistance information.

In addition, for the relevant descriptions on the steps 103d-103d, reference may be made to the embodiments described above, and they will not be elaborated in embodiments of the present invention here.

In summary, in the random access method according to embodiments of the present invention, the UE may acquire the trigger information, and the trigger information indicates the UE to trigger the random access process; and the UE may determine the uplink synchronization assistance information and the first position of the UE; and the random access channel preamble (RACH preamble) signal is sent to the base station according to the first position of the UE and the uplink synchronization assistance information. Therefore, embodiments of the present invention propose a method for determining the first position and the uplink synchronization assistance information in the random access process of an NTN system, to ensure that the UE can successfully access the base station in the NTN system.

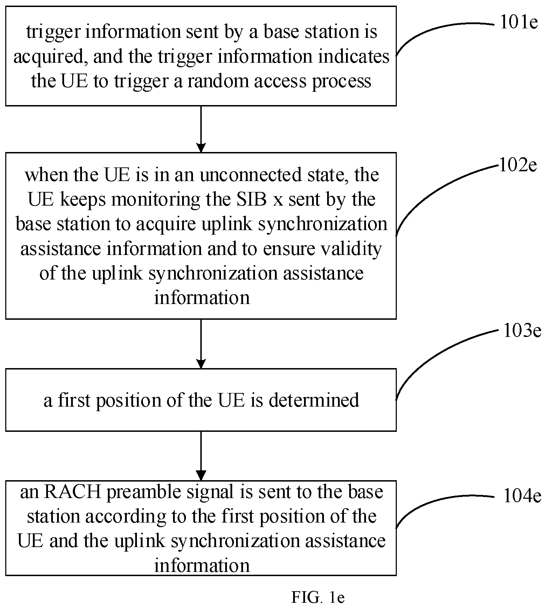

FIG. 1e is a schematic flowchart of a random access method according to an embodiment of the present invention. The method is performed by a UE. As shown in FIG. 1e, the random access method may include the following steps.

In step 101e, trigger information sent by a base station is acquired. The trigger information indicates the UE to trigger a random access process.

In step 102e, when the UE is in an unconnected state, the UE keeps monitoring the SIB x sent by the base station to acquire uplink synchronization assistance information and to ensure validity of the uplink synchronization assistance information, where x is a positive integer, and the SIB x includes the uplink synchronization assistance information.

In an embodiment of the present invention, when the UE is in the unconnected state, the UE still keeps monitoring the SIB x sent by the base station to ensure the validity of the uplink synchronization assistance information. On this basis, after the UE acquires the trigger information sent by the high layer of the UE, it may use the uplink synchronization assistance information within the validity duration.

In an embodiment of the present invention, specifically, the UE may monitor the SIB x according to configuration information of the SIB x previously configured by the base station. Specifically, the configuration information of the SIB x previously configured by the base station may be those configured by the base station to the UE when the UE was in the connected state last time.

It should be noted that, in an embodiment of the present invention, a difference between the embodiment corresponding to FIG. 1e and the above embodiment corresponding to FIG. 1d is that the time when the UE monitors the SIB x periodically sent by the base station in the unconnected state is different. Specifically, in the embodiment corresponding to FIG. 1e, when the UE switches to the unconnected state, the UE will always monitor the SIB x periodically sent by the base station in the whole process of the UE being in the unconnected state to ensure the validity of uplink synchronization assistance information. In the above embodiment corresponding to FIG. 1d, when the UE switches to the unconnected state, the UE does not always monitor the SIB x periodically sent by the base station in the whole process of the UE being in the unconnected state to ensure the validity of the uplink synchronization assistance information. Instead, when the UE in the unconnected state receives the trigger information and triggers the random access process, it starts to monitor the SIB x periodically sent by the base station to ensure the validity of the uplink synchronization assistance information. That is, in the embodiment corresponding to FIG. 1d, the UE only monitors the SIB x periodically sent by the base station in a duration from the start of the random access process to the successful access to the base station to ensure the validity of the uplink synchronization assistance information.

Further, it should be noted that when the UE successfully accesses the base station and switches to the connected state, the UE will still monitor the SIB x periodically sent by the base station.

In step 103e, a first position of the UE is determined.

In step 104e, an RACH preamble signal is sent to the base station according to the first position of the UE and the uplink synchronization assistance information.

In addition, for the relevant descriptions on the steps 101e-104e, reference may be made to the embodiments described above, and they will not be elaborated in embodiments of the present invention here.

In summary, in the random access method according to embodiments of the present invention, the UE may acquire the trigger information, and the trigger information indicates the UE to trigger the random access process; and the UE may determine the uplink synchronization assistance information and the first position of the UE; and the random access channel preamble (RACH preamble) signal is sent to the base station according to the first position of the UE and the uplink synchronization assistance information. Therefore, embodiments of the present invention propose a method for determining the first position and the uplink synchronization assistance information in the random access process of an NTN system, to ensure that the UE can successfully access the base station in the NTN system.

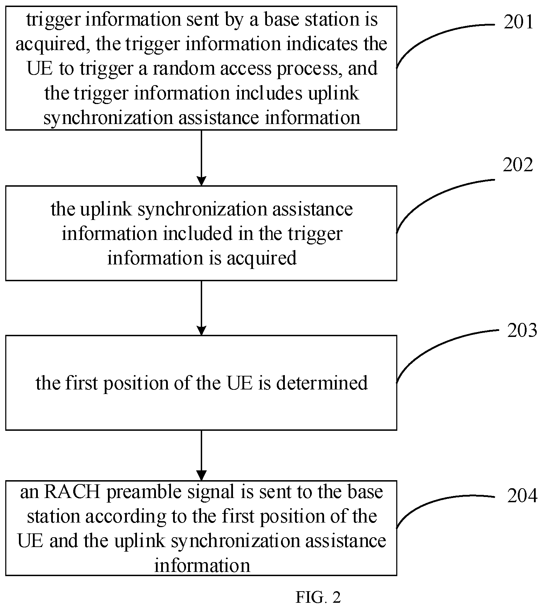

FIG. 2 is a schematic flowchart of a random access method according to an embodiment of the present invention. The method is performed by a UE. As shown in FIG. 2, the random access method may include the following steps.

In step 201, trigger information sent by a base station is acquired. The trigger information indicates the UE to trigger a random access process. The trigger information includes uplink synchronization assistance information, and a valid time of the uplink synchronization assistance information is longer than a time T1 for the UE to complete a measurement of the first position once.

The uplink synchronization assistance information may be included in an SIB x, where x is a positive integer, and the SIB x is included in the trigger information. For the relevant descriptions on the SIB x, reference may be made to the embodiments described above, and they will not be elaborated here.

Further, in an embodiment of the present invention, the valid time of the uplink synchronization assistance information is longer than the time T1 for the UE to complete the measurement of the first position once in an unconnected state, for example, the valid time of the uplink synchronization assistance information may be longer than a time difference between a time point when the UE sends the RACH preamble signal to the base station and a time point when the UE receives the trigger information sent by the base station. In this way, it can ensure that the uplink synchronization assistance information is still valid when the first position of the UE is determined subsequently, thereby ensuring that in the subsequent process, the step of sending the RACH preamble signal to the base station according to the first position and the uplink synchronization assistance information can be performed successfully.

In step 202, the uplink synchronization assistance information included in the trigger information is acquired.

In step 203, the first position of the UE is determined.

In step 204, the RACH preamble signal is sent to the base station according to the first position of the UE and the uplink synchronization assistance information.

In addition, for the relevant descriptions on the steps 201-204, reference may be made to the embodiments described above, and they will not be elaborated in embodiments of the present invention here.

In summary, in the random access method according to embodiments of the present invention, the UE may acquire the trigger information, and the trigger information indicates the UE to trigger the random access process; and the UE may determine the uplink synchronization assistance information and the first position of the UE; and the random access channel preamble (RACH preamble) signal is sent to the base station according to the first position of the UE and the uplink synchronization assistance information. Therefore, embodiments of the present invention propose a method for determining the first position and the uplink synchronization assistance information in the random access process of an NTN system, to ensure that the UE can successfully access the base station in the NTN system.

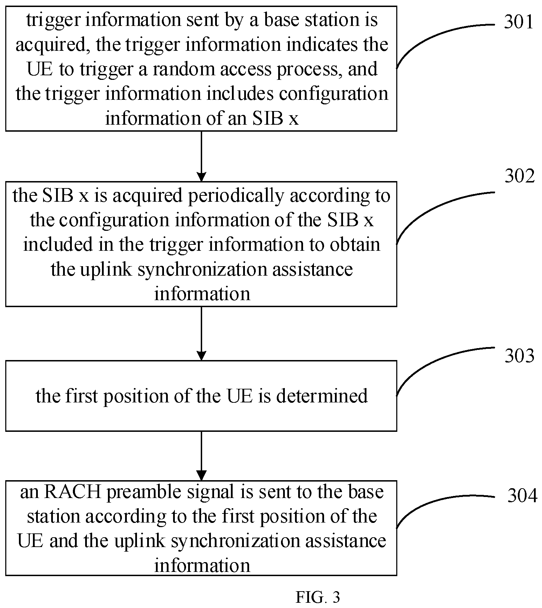

FIG. 3 is a schematic flowchart of a random access method according to an embodiment of the present invention. The method is performed by a UE. As shown in FIG. 3, the random access method may include the following steps.

In step 301, trigger information sent by a base station is acquired. The trigger information indicates the UE to trigger a random access process. The trigger information includes configuration information of an SIB x, where x is a positive integer, and the SIB x includes uplink synchronization assistance information.

In step 302, the SIB x is acquired according to the configuration information of the SIB x included in the trigger information to obtain the uplink synchronization assistance information.

Specifically, in an embodiment of the present invention, the UE can read the new SIB x in the next SI window/SI period according to the configuration information of the SIB x.

In step 303, a first position of the UE is determined.

In step 304, an RACH preamble signal is sent to the base station according to the first position of the UE and the uplink synchronization assistance information.

In addition, for the relevant descriptions on the steps 301-304, reference may be made to the embodiments described above, and they will not be elaborated in embodiments of the present invention here.

In summary, in the random access method according to embodiments of the present invention, the UE may acquire the trigger information, and the trigger information indicates the UE to trigger the random access process; and the UE may determine the uplink synchronization assistance information and the first position of the UE; and the random access channel preamble (RACH preamble) signal is sent to the base station according to the first position of the UE and the uplink synchronization assistance information. Therefore, embodiments of the present invention propose a method for determining the first position and the uplink synchronization assistance information in the random access process of an NTN system, to ensure that the UE can successfully access the base station in the NTN system.

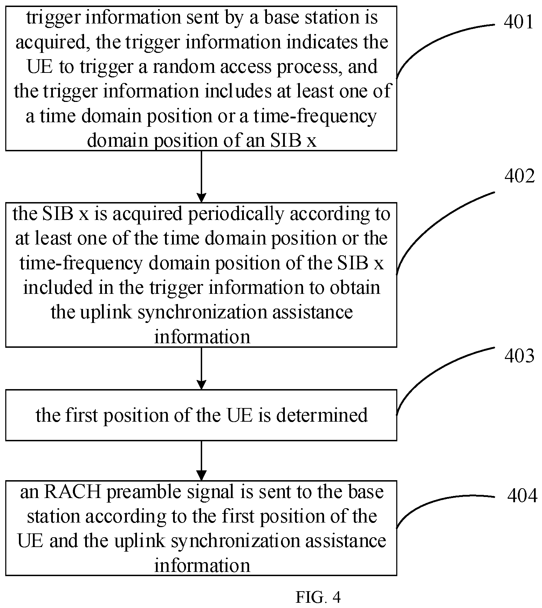

FIG. 4 is a schematic flowchart of a random access method according to an embodiment of the present invention. The method is performed by a UE. As shown in FIG. 4, the random access method may include the following steps.

In step 401, trigger information sent by a base station is acquired. The trigger information indicates the UE to trigger a random access process. The trigger information includes a time domain position and/or a time-frequency domain position of an SIB x.

In step 402, the SIB x is acquired according to the time domain position and/or the time-frequency domain position of the SIB x included in the trigger information to obtain the uplink synchronization assistance information.

In step 403, a first position of the UE is determined.

In step 404, an RACH preamble signal is sent to the base station according to the first position of the UE and the uplink synchronization assistance information.

In addition, for the relevant descriptions on the steps 401-404, reference may be made to the embodiments described above, and they will not be elaborated in embodiments of the present invention here.

In summary, in the random access method according to embodiments of the present invention, the UE may acquire the trigger information, and the trigger information indicates the UE to trigger the random access process; and the UE may determine the uplink synchronization assistance information and the first position of the UE; and the random access channel preamble (RACH preamble) signal is sent to the base station according to the first position of the UE and the uplink synchronization assistance information. Therefore, embodiments of the present invention propose a method for determining the first position and the uplink synchronization assistance information in the random access process of an NTN system, to ensure that the UE can successfully access the base station in the NTN system.

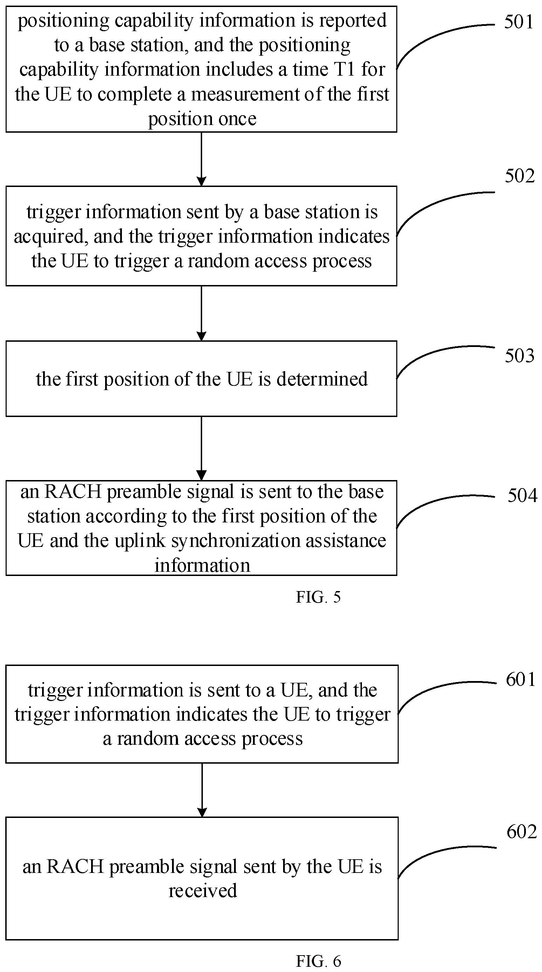

FIG. 5 is a schematic flowchart of a random access method according to an embodiment of the present invention. The method is performed by a UE. As shown in FIG. 5, the random access method may include the following steps.

In step 501, positioning capability information is reported to a base station. The positioning capability information includes a time T1 for the UE to complete a measurement of the first position once.

Specifically, in an embodiment of the present invention, the positioning capability information includes the time T1 for the UE to complete the measurement of the first position once in an unconnected state.

In step 502, trigger information sent by a base station is acquired. The trigger information indicates the UE to trigger a random access process.

In step 503, a first position of the UE is determined.

In step 504, an RACH preamble signal is sent to the base station according to the first position of the UE and uplink synchronization assistance information.

In addition, for the relevant descriptions on the steps 501-504, reference may be made to the embodiments described above, and they will not be elaborated in embodiments of the present invention here.

In summary, in the random access method according to embodiments of the present invention, the UE may acquire the trigger information, and the trigger information indicates the UE to trigger the random access process; and the UE may determine the uplink synchronization assistance information and the first position of the UE; and the random access channel preamble (RACH preamble) signal is sent to the base station according to the first position of the UE and the uplink synchronization assistance information. Therefore, embodiments of the present invention propose a method for determining the first position and the uplink synchronization assistance information in the random access process of an NTN system, to ensure that the UE can successfully access the base station in the NTN system.

FIG. 6 is a schematic flowchart of a random access method according to an embodiment of the present invention. The method is performed by a base station. As shown in FIG. 6, the random access method may include the following steps.

In step 601, trigger information is sent to a UE, and the trigger information indicates the UE to trigger a random access process.

In step 602, an RACH preamble signal sent by the UE is received.

In summary, in the random access method according to embodiments of the present invention, the UE may acquire the trigger information, and the trigger information indicates the UE to trigger the random access process; and the UE may determine the uplink synchronization assistance information and the first position of the UE; and the random access channel preamble (RACH preamble) signal is sent to the base station according to the first position of the UE and the uplink synchronization assistance information. Therefore, embodiments of the present invention propose a method for determining the first position and the uplink synchronization assistance information in the random access process of an NTN system, to ensure that the UE can successfully access the base station in the NTN system.

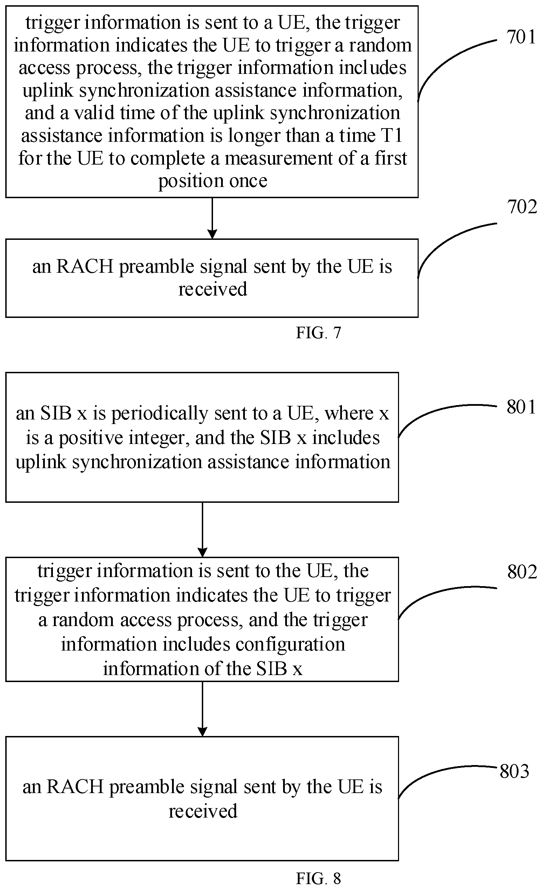

FIG. 7 is a schematic flowchart of a random access method according to an embodiment of the present invention. The method is performed by a base station. As shown in FIG. 7, the random access method may include the following steps.

In step 701, trigger information is sent to a UE. The trigger information indicates the UE to trigger a random access process, the trigger information includes uplink synchronization assistance information, and a valid time of the uplink synchronization assistance information is longer than a time T1 for the UE to complete a measurement of a first position once.

In step 702, an RACH preamble signal sent by the UE is received.

In summary, in the random access method according to embodiments of the present invention, the UE may acquire the trigger information, and the trigger information indicates the UE to trigger the random access process; and the UE may determine the uplink synchronization assistance information and the first position of the UE; and the random access channel preamble (RACH preamble) signal is sent to the base station according to the first position of the UE and the uplink synchronization assistance information. Therefore, embodiments of the present invention propose a method for determining the first position and the uplink synchronization assistance information in the random access process of an NTN system, to ensure that the UE can successfully access the base station in the NTN system.

FIG. 8 is a schematic flowchart of a random access method according to an embodiment of the present invention. The method is performed by a base station. As shown in FIG. 8, the random access method may include the following steps.

In step 801, an SIB x is periodically sent to a UE, where x is a positive integer, and the SIB x includes uplink synchronization assistance information.

In step 802, trigger information is sent to the UE. The trigger information indicates the UE to trigger a random access process, and the trigger information includes configuration information of the SIB x.

In step 803, an RACH preamble signal sent by the UE is received.

In summary, in the random access method according to embodiments of the present invention, the UE may acquire the trigger information, and the trigger information indicates the UE to trigger the random access process; and the UE may determine the uplink synchronization assistance information and the first position of the UE; and the random access channel preamble (RACH preamble) signal is sent to the base station according to the first position of the UE and the uplink synchronization assistance information. Therefore, embodiments of the present invention propose a method for determining the first position and the uplink synchronization assistance information in the random access process of an NTN system, to ensure that the UE can successfully access the base station in the NTN system.

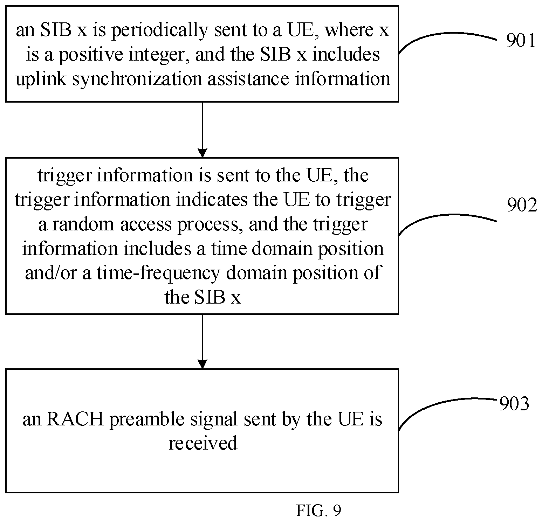

FIG. 9 is a schematic flowchart of a random access method according to an embodiment of the present invention. The method is performed by a base station. As shown in FIG. 9, the random access method may include the following steps.

In step 901, an SIB x is periodically sent to a UE, where x is a positive integer, and the SIB x includes uplink synchronization assistance information.

In step 902, trigger information is sent to the UE. The trigger information indicates the UE to trigger a random access process, and the trigger information includes a time domain position and/or a time-frequency domain position of the SIB x.

In step 903, an RACH preamble signal sent by the UE is received.

In summary, in the random access method according to embodiments of the present invention, the UE may acquire the trigger information, and the trigger information indicates the UE to trigger the random access process; and the UE may determine the uplink synchronization assistance information and the first position of the UE; and the random access channel preamble (RACH preamble) signal is sent to the base station according to the first position of the UE and the uplink synchronization assistance information. Therefore, embodiments of the present invention propose a method for determining the first position and the uplink synchronization assistance information in the random access process of an NTN system, to ensure that the UE can successfully access the base station in the NTN system.

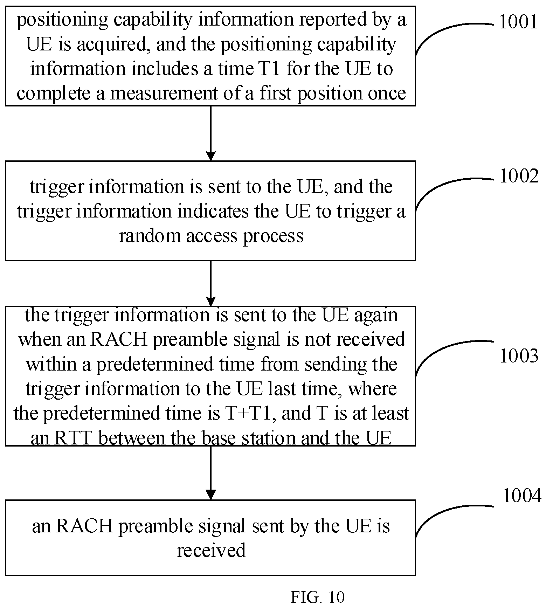

FIG. 10 is a schematic flowchart of a random access method according to an embodiment of the present invention. The method is performed by a base station. As shown in FIG. 10, the random access method may include the following steps.

In step 1001, positioning capability information reported by a UE is acquired, and the positioning capability information includes a time T1 for the UE to complete a measurement of a first position once.

In step 1002, trigger information is sent to the UE, and the trigger information indicates the UE to trigger a random access process.

In step 1003, the trigger information is sent to the UE again when an RACH preamble signal is not received within a predetermined time from sending the trigger information to the UE last time, the predetermined time is T+T1, and T is at least a round-trip time (RTT) between the base station and the UE.

In an embodiment of the present invention, when the RACH preamble signal is not received within the predetermined time after sending the trigger information to the UE last time, it indicates that the triggering of the random access process of the UE fails. At this time, it is necessary to send the trigger information to the UE again to cause the UE to trigger the random access process again.

In an embodiment of the present invention, when performing the random access in an NTN system, it is necessary to determine the first position of the UE. In view of this, by setting the predetermined time to T+ T1, it can be ensured that the uplink transmission request in the NTN system is met.

In step 1004, the RACH preamble signal sent by the UE is received.

In summary, in the random access method according to embodiments of the present invention, the UE may acquire the trigger information, and the trigger information indicates the UE to trigger the random access process; and the UE may determine the uplink synchronization assistance information and the first position of the UE; and the random access channel preamble (RACH preamble) signal is sent to the base station according to the first position of the UE and the uplink synchronization assistance information. Therefore, embodiments of the present invention propose a method for determining the first position and the uplink synchronization assistance information in the random access process of an NTN system, to ensure that the UE can successfully access the base station in the NTN system.

In addition, an illustrative example is given for the above random access method.

For example, the base station sends paging information to the UE to page the UE, and when the UE parses the paging information, it finds that it is paged by the base station. At this time, the UE performs the measurement of the first position to obtain its own first position, and reads the uplink synchronization assistance information according to the indication of the paging information (for the specific reading method, reference may be made to the above embodiment), and then sends a Msg1 to the base station according to its own first position and the uplink synchronization assistance information. The Msg1 includes an RACH preamble signal for initiating a contention based RACH. Subsequently, a Msg2 sent by the base station will be acquired.

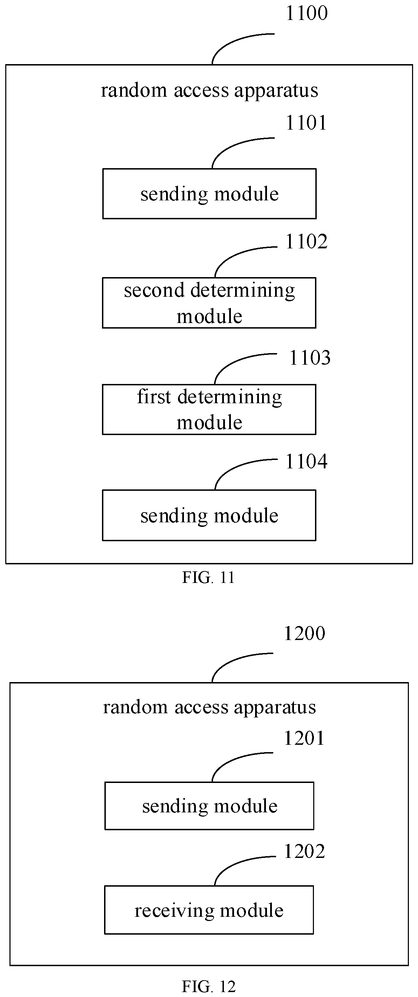

FIG. 11 is a schematic block diagram of a random access apparatus according to an embodiment of the present invention, as shown in FIG. 11, the apparatus 1100 may include: an acquiring module, a first determining module, a second determining module, and a sending module. The acquiring module is configured to acquire trigger information, and the trigger information indicates a UE to trigger a random access process. The first determining module is configured to determine uplink synchronization assistance information. The second determining module is configured to determine a first position of the UE. The sending module is configured to send a random access channel preamble (RACH preamble) signal to a base station according to the first position of the UE and the uplink synchronization assistance information.

In summary, in the random access apparatus according to embodiments of the present invention, the UE may acquire the trigger information, and the trigger information indicates the UE to trigger the random access procedure; and the UE may determine the uplink synchronization assistance information and the first position of the UE; and the random access channel preamble (RACH preamble) signal is sent to the base station according to the first position of the UE and the uplink synchronization assistance information. Therefore, embodiments of the present invention propose a method for determining the first position and the uplink synchronization assistance information in the random access process of an NTN system, to ensure that the UE can successfully access the base station in the NTN system.

In an embodiment of the present invention, the uplink synchronization assistance information includes at least one of ephemeris information or a common timing advance (common TA).

In an embodiment of the present invention, the acquiring module is further configured to acquire the trigger information sent by a high layer of the UE.

In an embodiment of the present invention, the first determining module is further configured to keep monitoring, by the UE, an SIB x sent by the base station to acquire the uplink synchronization assistance information and to ensure validity of the uplink synchronization assistance information, after the trigger information is acquired, where x is a positive integer, and the SIB x includes the uplink synchronization assistance information.

In an embodiment of the present invention, the first determining module is further configured to keep monitoring, by the UE, an SIB x sent by the base station to acquire the uplink synchronization assistance information and to ensure validity of the uplink synchronization assistance information, when the UE is in an unconnected state, where x is a positive integer, and the SIB x includes the uplink synchronization assistance information.

In an embodiment of the present invention, the acquiring module is further configured to acquire the trigger information sent by the base station.

In an embodiment of the present invention, the trigger information includes the uplink synchronization assistance information, and a valid time of the uplink synchronization assistance information is longer than a time T1 for the UE to complete a measurement of the first position once. The first determining module is further configured to acquire the uplink synchronization assistance information included in the trigger information.

In an embodiment of the present invention, the trigger information includes configuration information of an SIB x, and determining the uplink synchronization assistance information includes: periodically acquiring the SIB x according to the configuration information of the SIB x included in the trigger information to obtain the uplink synchronization assistance information.

In an embodiment of the present invention, the trigger information includes at least one of a time domain position or a time-frequency domain position of the SIB x; and determining the uplink synchronization assistance information includes: periodically acquiring the SIB x according to at least one of the time domain position or the time-frequency domain position of the SIB x included in the trigger information to obtain the uplink synchronization assistance information.

In an embodiment of the present invention, the sending module is further configured to: acquire a position of a satellite according to the ephemeris information; pre-compensate a frequency offset of a channel between the UE and the satellite according to the first position of the UE and the position of the satellite to obtain a transmitting frequency; pre-compensate a propagation delay of the channel between the UE and the satellite and a channel between the satellite and the base station according to the first position of the UE, the position of the satellite and the uplink synchronization assistance information to obtain an uplink transmission timing position; and send the RACH preamble signal to the base station according to the transmitting frequency and the uplink transmission timing position.

In an embodiment of the present invention, the apparatus is further configured to: report positioning capability information to the base station, and the positioning capability information includes a time T 1 for the UE to complete a measurement of the first position once.

In an embodiment of the present invention, the first position of the UE is measured by the UE. The second determining module is further configured to: determine whether a requirement of a time error of a non-terrestrial network (Te_NTN) is met when an RACH preamble is sent using the first position of the UE measured last time; in response to the requirement of the Te_NTN being met when the RACH preamble is sent using the first position of the UE measured last time, determine the first position of the UE measured last time as the first position of the UE; or in response to the requirement of the Te_NTN being not met when the RACH preamble is sent using the first position of the UE measured last time, re-measure the first position of the UE, and determine the first position re-measured as the first position of the UE.

FIG. 12 is a schematic block diagram of a random access apparatus according to an embodiment of the present invention, as shown in FIG. 12, the apparatus 1200 may include: a sending module and a receiving module. The sending module is configured to send trigger information to a UE, and the trigger information indicates the UE to trigger a random access process. The receiving module is configured to receive an RACH preamble signal sent by the UE.

In summary, in the random access apparatus according to embodiments of the present invention, the UE may acquire the trigger information, and the trigger information indicates the UE to trigger the random access procedure; and the UE may determine the uplink synchronization assistance information and the first position of the UE; and the random access channel preamble (RACH preamble) signal is sent to the base station according to the first position of the UE and the uplink synchronization assistance information. Therefore, embodiments of the present invention propose a method for determining the first position and the uplink synchronization assistance information in the random access process of an NTN system, to ensure that the UE can successfully access the base station in the NTN system.

In an embodiment of the present invention, the trigger information includes uplink synchronization assistance information, and a valid time of the uplink synchronization assistance information is longer than a time T1 for the UE to complete a measurement of a first position once.

In an embodiment of the present invention, an SIB x is periodically sent to the UE, where x is a positive integer, and the SIB x includes uplink synchronization assistance information.

In an embodiment of the present invention, the uplink synchronization assistance information includes at least one of ephemeris information or a common TA.

In an embodiment of the present invention, the trigger information includes configuration information of the SIB x.

In an embodiment of the present invention, the trigger information includes at least one of a time domain position or a time-frequency domain position of the SIB x.

In an embodiment of the present invention, the apparatus is further configured to: acquire positioning capability information reported by the UE, and the positioning capability information includes a time T1 for the UE to complete a measurement of a first position once.

In an embodiment of the present invention, after sending the trigger information to the UE, the apparatus is further configured to: send the trigger information to the UE again when the RACH preamble signal is not received within a predetermined time from sending the trigger information to the UE last time, where the predetermined time is T+T1, and T is at least a round-trip time (RTT) between the base station and the UE.

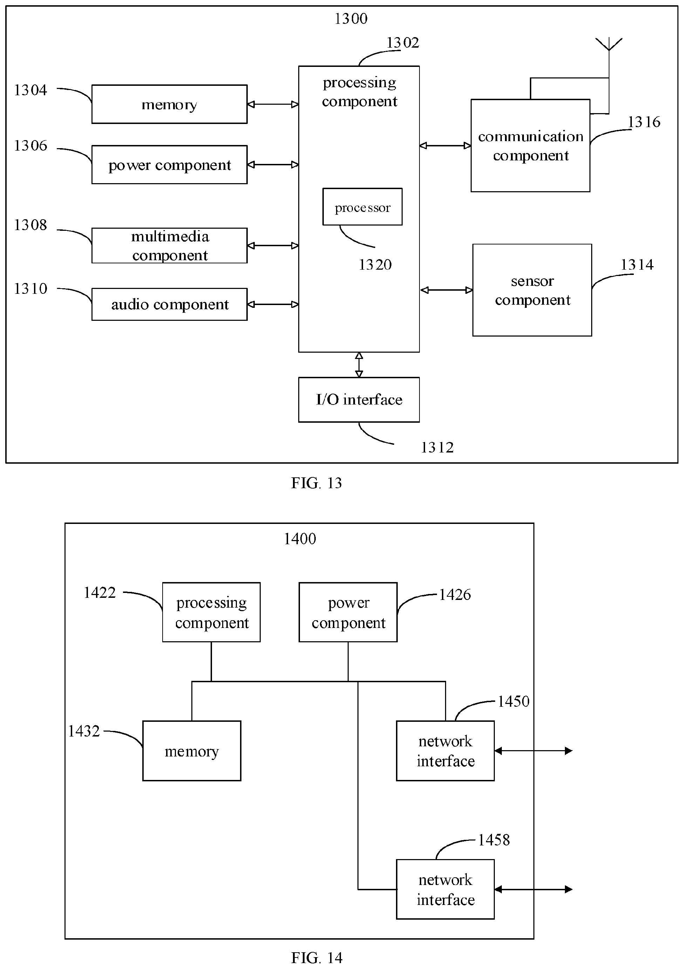

FIG. 13 is a schematic block diagram of a user equipment (UE) 1300 according to an embodiment of the present invention. For example, the UE 1300 may be a mobile phone, a computer, a digital broadcast terminal, a messaging device, a game console, a tablet device, a medical device, a fitness device, a personal digital assistant, or the like.

Referring to FIG. 13, the UE 1300 may include at least one of the following components: a processing component 1302, a memory 1304, a power component 1306, a multimedia component 1308, an audio component 1310, an input/output (I/O) interface 1312, a sensor component 1313, and a communication component 1316.

The processing component 1302 typically controls overall operations of the UE 1300, such as the operations associated with display, phone calls, data communications, camera operations, and recording operations. The processing component 1302 may include at least one processor 1320 to execute instructions to perform all or some of the steps in the above-described methods. Moreover, the processing component 1302 may include at least one module which facilitates the interaction between the processing component 1302 and other components. For instance, the processing component 1302 may include a multimedia module to facilitate the interaction between the multimedia component 1308 and the processing component 1302.

The memory 1304 is configured to store various types of data to support the operation of the UE 1300. Examples of such data include instructions for any applications or methods operated on the UE 1300, contact data, phonebook data, messages, pictures, videos, etc. The memory 1304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the UE 1300. The power component 1306 may include a power management system, at least one power source, and any other components associated with the generation, management, and distribution of power in the UE 1300.

The multimedia component 1308 includes a screen providing an output interface between the UE 1300 and the user. In some embodiments, the screen may include a liquid crystal display (LCD) and a touch panel (TP). If the screen includes the touch panel, the screen may be implemented as a touch screen to receive input signals from the user. The touch panel includes at least one touch sensor to sense touches, swipes, and gestures on the touch panel. The touch sensor may not only sense a boundary of a touch or swipe action, but also sense a period of time and a pressure associated with the touch or swipe action. In some embodiments, the multimedia component 1308 includes a front camera and/or a rear camera. The front camera and/or the rear camera may receive an external multimedia datum while the UE 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone (MIC) configured to receive an external audio signal when the UE 1300 is in an operation mode, such as a call mode, a recording mode, and a voice recognition mode. The received audio signal may be further stored in the memory 1304 or transmitted via the communication component 1316. In some embodiments, the audio component 1310 further includes a speaker to output audio signals.

The I/O interface 1312 provides an interface between the processing component 1302 and peripheral interface modules, such as keyboards, click wheels, buttons, and the like. The buttons may include, but are not limited to, a home button, a volume button, a starting button, and a locking button.

The sensor component 1313 includes at least one sensor to provide status assessments of various aspects of the UE 1300. For instance, the sensor component 1313 may detect an open/closed status of the UE 1300, relative positioning of components, e.g., the display and the keypad, of the UE 1300, a change in position of the UE 1300 or a component of the UE 1300, a presence or absence of user contact with the UE 1300, an orientation or an acceleration/deceleration of the UE 1300, and a change in temperature of the UE 1300. The sensor component 1313 may include a proximity sensor configured to detect the presence of nearby objects without any physical contact. The sensor component 1313 may further include a light sensor, such as a CMOS or CCD image sensor, for use in imaging applications. In some embodiments, the sensor component 1313 may further include an accelerometer sensor, a gyroscope sensor, a magnetic sensor, a pressure sensor, or a temperature sensor.

The communication component 1316 is configured to facilitate communication, wired or wireless, between the UE 1300 and other devices. The UE 1300 can access a wireless network based on a communication standard, such as Wi-Fi, 2G, or 3G, or a combination thereof. In an illustrative embodiment, the communication component 1316 receives a broadcast signal or broadcast associated information from an external broadcast management system via a broadcast channel. In an illustrative embodiment, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the UE 1300 may be implemented with at least one application specific integrated circuit (ASIC), digital signal processor (DSP), digital signal processing device (DSPD), programmable logic device (PLD), field programmable gate array (FPGA), controllers, micro-controllers, microprocessors, or other electronic elements, for performing the method in the above-mentioned embodiments.

FIG. 14 is a schematic block diagram of a network device 1400 according to an embodiment of the present application. For example, the network device 1400 may be provided as a network device. Referring to FIG. 14, the network device 1400 includes a processing component 1411, which further includes at least one processor, and a memory resource represented by a memory 1432 for storing instructions, such as application programs, that can be executed by the processing component 1422. The application program stored in the memory 1432 may include one or more modules, each corresponding to a set of instructions. In addition, the processing component 1417 is configured to execute instructions to perform any of the foregoing methods performed by the network device, for example, the method shown in FIG. 1.

The network device 1400 may also include a power component 1417 configured to perform power management of the network device 1400, a wired or wireless network interface 1450 configured to connect the network device 1400 to the network, and an input/output (I/O) interface 1457. The network device 1400 can operate based on the operating system stored in the memory 1432, such as Windows Server TM, Mac OS XTM, Unix TM, Linux TM, Free BSDTM, or the like.

In the above embodiments provided in the present invention, the methods according to embodiments of the present invention are introduced from perspectives of the network device, the UE, and an RIS array, respectively. In order to implement the various functions in the methods according to the above embodiments of the present invention, the network device and the UE each may include a hardware structure and a software module, and implement the above various functions in a form of the hardware structure, the software module, or the hardware structure plus the software module. A certain function among the above-mentioned various functions may be implemented in the manner of the hardware structure, the software module, or the hardware structure plus the software module.

In the above embodiments provided in the present invention, the methods according to embodiments of the present invention are introduced from the perspectives of the network device, the UE, and an RIS array, respectively. In order to implement the various functions in the methods according to the above embodiments of the present invention, the network device and the UE each may include a hardware structure and a software module, and implement the above various functions in a form of the hardware structure, the software module, or the hardware structure plus the software module. A certain function among the above-mentioned various functions may be implemented in the manner of the hardware structure, the software module, or the hardware structure plus the software module.

Embodiments of the present invention provide a communication apparatus. The communication apparatus may include a transceiving module and a processing module. The transceiving module may include a sending module and/or a receiving module, the sending module is configured to implement a sending function, the receiving module is configured to implement a receiving function, and the transceiving module may implement the sending function and/or the receiving function.

The communication apparatus may be a terminal device (such as the terminal device as described in the above method embodiments), an apparatus in the terminal device, or an apparatus that can be matched with the terminal device. Alternatively, the communication apparatus may be a network device, an apparatus in the network device, or an apparatus that can be matched with the network device.

Embodiments of the present invention provide another communication apparatus. The communication apparatus may be a network device, a terminal device (such as the terminal device as described in the above method embodiments), may also be a chip, a chip system or a processor that supports the network device to implement the above method, or may also be a chip, a chip system or a processor that supports the terminal device to implement the above method. The apparatus may be used to implement the methods as described in the above method embodiments, and for details, reference may be made to the descriptions on the above method embodiments.

The communication apparatus may include one or more processors. The processor may be a general-purpose processor or a special-purpose processor. For example, the processor may be a baseband processor or a central processing unit. The baseband processor may be configured to process a communication protocol and communication data, and the central processing unit may be configured to control the communication apparatus (such as a network device, a baseband chip, a terminal device, a terminal chip, a DU or a CU, etc.), execute computer programs, and process data of the computer programs.

Optionally, the communication apparatus may further include one or more memories that may have stored therein a computer program. The processor executes the computer program to cause the communication apparatus to implement the methods as described in the above method embodiments. Optionally, the memory may have stored therein data. The communication apparatus and the memory may be set separately or integrated together.

Optionally, the communication apparatus may further include a transceiver and an antenna. The transceiver may be called a transceiving element, a transceiving machine, a transceiving circuit or the like, for implementing a transceiving function. The transceiver may include a receiver and a transmitter. The receiver may be called a receiving machine, a receiving circuit or the like, for implementing a receiving function. The transmitter may be called a sending machine, a sending circuit or the like for implementing a sending function.

Optionally, the communication apparatus may further include one or more interface circuits. The interface circuit is configured to receive a code instruction and transmit the code instruction to the processor. The processor runs the code instruction to cause the communication apparatus to perform the methods as described in the above method embodiments.

When the communication apparatus is the terminal device (such as the terminal device as described in the above method embodiments), the processor is configured to perform the method as shown in any one of FIG. 1 to FIG. 14.

When the communication apparatus is the network device, the transceiver is configured to perform the method as shown in any one of FIG. 15 to FIG. 21.

In an implementation, the processor may include the transceiver configured to implement receiving and sending functions. For example, the transceiver may be a transceiving circuit, an interface, or an interface circuit. The transceiving circuit, the interface or the interface circuit configured to implement the receiving and sending functions may be separated or may be integrated together. The above transceiving circuit, interface or interface circuit may be configured to read and write codes/data, or the above transceiving circuit, interface or interface circuit may be configured to transmit or transfer signals.

In an implementation, the processor may have stored therein a computer program that, when run on the processor, causes the communication apparatus to implement the method as described in the foregoing method embodiments. The computer program may be solidified in the processor, and in this case, the processor may be implemented by a hardware.

In an implementation, the communication apparatus may include a circuit, and the circuit may implement the sending, receiving or communicating function in the foregoing method embodiments. The processor and the transceiver described in the present invention may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process techniques, such as a complementary metal oxide semiconductor (CMOS), an nMetal-oxide-semiconductor (NMOS), a P-type metal oxide semiconductor (PMOS), a bipolar junction transistor (BJT), a bipolar CMOS (BiCMOS), silicon germanium (SiGe), gallium arsenide (GaAs), etc.

The communication apparatus described in the above embodiments may be the network device or the terminal device (such as the terminal device as described in the above method embodiments), but the scope of the communication apparatus described in the present invention is not limited thereto, and a structure of the communication apparatus is not limited. The communication apparatus may be a stand-alone device or may be a part of a larger device. For example, the communication apparatus may be:
(1) a stand-alone integrated circuit (IC), or a chip, or a chip system or a subsystem;
(2) a set of one or more ICs, optionally, the set of ICs may also include a storage component for storing data and computer programs;
(3) an ASIC, such as a modem;
(4) a module that may be embedded in other devices;
(5) a receiver, a terminal device, an intelligent terminal device, a cellular phone, a wireless device, a handheld machine, a mobile unit, a vehicle device, a network device, a cloud device, an artificial intelligence device, etc.;
(6) others.

For the case where the communication apparatus may be a chip or a chip system, the chip includes a processor and an interface. In the chip, one or more processors may be provided, and a plurality of interfaces may be provided.

Optionally, the chip further includes a memory for storing necessary computer programs and data.

Those skilled in the art may also understand that various illustrative logical blocks and steps listed in embodiments of the present invention may be implemented by electronic hardware, computer software, or a combination thereof. Whether such functions are implemented by hardware or software depends on specific applications and design requirements of an overall system. For each specific application, those skilled in the art may use various methods to implement the described functions, but such implementation should not be understood as beyond the protection scope of embodiments of the present invention.

Embodiments of the present invention also provide a system for determining a duration of a side link. The system includes the communication apparatus as the terminal device (such as the first terminal device in the foregoing method embodiments) and the communication apparatus as the network device as described in the aforementioned embodiments, or the system includes the communication apparatus as the terminal device (such as the first terminal device in the foregoing method embodiments) and the communication apparatus as the network device as described in the aforementioned embodiments.

The present invention also provides a readable storage medium having stored therein an instruction that, when executed by a computer, cause functions of any of the above method embodiments to be implemented.

The present invention also provides a computer program product that, when executed by a computer, causes functions of any of the above method embodiments to be implemented.

The above embodiments may be implemented in whole or in part by software, hardware, firmware or any combination thereof. When implemented using the software, the above embodiments may be implemented in whole or in part in a form of the computer program product. The computer program product includes one or more computer programs. When the computer program is loaded and executed on the computer, all or part of the processes or functions according to embodiments of the present invention will be generated. The computer may be a general-purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (such as via infrared, wireless, or microwave, etc.). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)) etc.

Those of ordinary skill in the art can understand that the first, second, and other numeral numbers involved in the present invention are only for convenience of description, and are not intended to limit the scope of embodiments of the present invention, nor are they intended to represent a sequential order.

The term "at least one" used in the present invention may also be described as one or more, and the term "a plurality of" may cover two, three, four or more, which are not limited in the present invention. In embodiments of the present invention, for a certain kind of technical features, the technical features in this kind of technical features are distinguished by terms like "first", "second", "third", "A", "B", "C" and "D", etc., and these technical features described with the "first", "second", "third", "A", "B", "C" and "D" have no order of priority and have no order of size.

Other embodiments of the present invention will be apparent to those skilled in the art from consideration of the specification and practice of the present invention disclosed here. The present invention is intended to cover any variations, uses, or adaptations of the present invention following the general principles thereof and including such departures from the present invention as come within known or customary practice in the art. It is intended that the specification and examples be considered as exemplary only, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. It is intended that the scope of the present invention only be limited by the appended claims.

## Claims

1. A random access method, performed by a user equipment (UE), comprising:
acquiring trigger information, wherein the trigger information indicates the UE to trigger a random access process;
determining uplink synchronization assistance information;
determining a first position of the UE; and
sending a random access channel preamble (RACH preamble) signal to a base station according to the first position of the UE and the uplink synchronization assistance information.

2. The method according to claim 1, wherein the uplink synchronization assistance information comprises at least one of ephemeris information or a common timing advance (common TA).

3. The method according to claim 1, wherein acquiring the trigger information comprises:
acquiring the trigger information sent by a high layer of the UE.

4. The method according to claim 1 or 3, wherein determining the uplink synchronization assistance information comprises:
keeping monitoring, by the UE, an SIB x sent by the base station to acquire the uplink synchronization assistance information and to ensure validity of the uplink synchronization assistance information, after acquiring the trigger information, where x is a positive integer, and the SIB x comprises the uplink synchronization assistance information.

5. The method according to claim 1 or 3, wherein determining the uplink synchronization assistance information comprises:
keeping monitoring, by the UE, an SIB x sent by the base station to acquire the uplink synchronization assistance information and to ensure validity of the uplink synchronization assistance information, when the UE is in an unconnected state, where x is a positive integer, and the SIB x comprises the uplink synchronization assistance information.

6. The method according to claim 1, wherein acquiring the trigger information comprises:
acquiring the trigger information sent by the base station.

7. The method according to claim 6, wherein the trigger information comprises the uplink synchronization assistance information, and a valid time of the uplink synchronization assistance information is longer than a time T1 for the UE to complete a measurement of the first position once;
wherein determining the uplink synchronization assistance information comprises:
acquiring the uplink synchronization assistance information comprised in the trigger information.

8. The method according to claim 6, wherein the trigger information comprises configuration information of an SIB x;
wherein determining the uplink synchronization assistance information comprises:
periodically acquiring the SIB x according to the configuration information of the SIB x comprised in the trigger information to obtain the uplink synchronization assistance information.

9. The method according to claim 6, wherein the trigger information comprises at least one of a time domain position or a time-frequency domain position of the SIB x;
wherein determining the uplink synchronization assistance information comprises:
periodically acquiring the SIB x according to at least one of the time domain position or the time-frequency domain position of the SIB x comprised in the trigger information to obtain the uplink synchronization assistance information.

10. The method according to claim 2, wherein sending the RACH preamble signal to the base station according to the first position of the UE and the uplink synchronization assistance information comprises:
acquiring a position of a satellite according to the ephemeris information;
pre-compensating a frequency offset of a channel between the UE and the satellite according to the first position of the UE and the position of the satellite to obtain a transmitting frequency;
pre-compensating a propagation delay of the channel between the UE and the satellite and a propagation delay of a channel between the satellite and the base station according to the first position of the UE, the position of the satellite and the common TA to obtain an uplink transmission timing position; and
sending the RACH preamble signal to the base station according to the transmitting frequency and the uplink transmission timing position.

11. The method according to claim 1, further comprising:
reporting positioning capability information to the base station, wherein the positioning capability information comprises a time T1 for the UE to complete a measurement of the first position once.

12. The method according to claim 1, wherein the first position of the UE is measured by the UE;
wherein determining the first position of the UE comprises:
determining whether a requirement of a time error of a non-terrestrial network (Te_NTN) is met when an RACH preamble is sent using a second position of the UE measured last time;
in response to the requirement of the Te _NTN being met when the RACH preamble is sent using the second position of the UE measured last time, determining the second position of the UE measured last time as the first position of the UE; or
in response to the requirement of the Te_NTN being not met when the RACH preamble is sent using the second position of the UE measured last time, re-measuring the second position of the UE, and determining the second position re-measured as the first position of the UE.

13. A random access method, performed by a base station, comprising:
sending trigger information to a user equipment (UE), wherein the trigger information indicates the UE to trigger a random access process; and
receiving a random access channel preamble (RACH preamble) signal sent by the UE.

14. The method according to claim 13, wherein the trigger information comprises uplink synchronization assistance information, and a valid time of the uplink synchronization assistance information is longer than a time T1 for the UE to complete a measurement of a first position once.

15. The method according to claim 13, wherein an SIB x is periodically sent to the UE, where x is a positive integer, and the SIB x comprises uplink synchronization assistance information.

16. The method according to any one of claims 13 to 15, wherein uplink synchronization assistance information comprises at least one of ephemeris information or a common timing advance (common TA).

17. The method according to claim 15, wherein the trigger information comprises configuration information of the SIB x.

18. The method according to claim 15, wherein the trigger information comprises at least one of a time domain position or a time-frequency domain position of the SIB x.

19. The method according to claim 13 or 14, further comprising:
acquiring positioning capability information reported by the UE, wherein the positioning capability information comprises a time T1 for the UE to complete a measurement of a first position once.

20. The method according to claim 19, wherein after sending the trigger information to the UE, the method further comprises:
sending the trigger information to the UE again when the RACH preamble signal is not received within a predetermined time from sending the trigger information to the UE last time, wherein the predetermined time is T+T1, and T is at least a round-trip time (RTT) between the base station and the UE.

21. A random access apparatus, comprising:
an acquiring module, configured to acquire trigger information, wherein the trigger information indicates a user equipment (UE) to trigger a random access process;
a first determining module, configured to determine uplink synchronization assistance information;
a second determining module, configured to determine a first position of the UE; and
a sending module, configured to send a random access channel preamble (RACH preamble) signal to a base station according to the first position of the UE and the uplink synchronization assistance information.

22. A random access apparatus, comprising:
a sending module, configured to send trigger information to a user equipment (UE), wherein the trigger information indicates the UE to trigger a random access process; and
a receiving module, configured to receive a random access channel preamble (RACH preamble) signal sent by the UE.

23. A communication apparatus, comprising:
a processor; and
a memory, having stored therein a computer program,
wherein the processor is configured to execute the computer program stored in the memory to cause the communication apparatus to perform the method according to any one of claims 1 to 12.

24. A communication apparatus, comprising:
a processor; and
a memory, having stored therein a computer program,
wherein the processor is configured to execute the computer program stored in the memory to cause the communication apparatus to perform the method according to any one of claims 13 to 20.

25. A communication apparatus, comprising:
a processor; and
an interface circuit for receiving a code instruction and transmitting the code instruction to the processor,
wherein the processor is configured to run the code instruction to perform the method according to any one of claims 1 to 12.

26. A communication apparatus, comprising:
a processor; and
an interface circuit for receiving a code instruction and transmitting the code instruction to the processor,
wherein the processor is configured to run the code instruction to perform the method according to any one of claims 13 to 20.

27. A computer-readable storage medium having stored therein an instruction that, when executed, causes the method according to any one of claims 1 to 12 to be performed.

28. A computer-readable storage medium having stored therein an instruction that, when executed, causes the method according to any one of claims 13 to 20 to be performed.
